# EUROPÄISCHE PATENTSCHRIFT

(11) **EP 0 437 758 B1**
(45) Veröffentlichungstag und Bekanntmachung des Hinweises auf die Patenterteilung: **14.09.1994**
(21) Anmeldenummer: 90124368.3
(22) Anmeldetag: 17.12.1990
(51) Int. Cl.: H02G 5/08, H02B 1/14

(54) **Schalt- oder Abgangskasten, insbesondere zur Verwendung auf Schienenverteilern von Niederspannungs-Schaltanlagen**
Switch or outlet box especially for use on the distributing bus bars of low voltage switchgear
Coffret électrique ou de départ, en particulier destiné aux répartiteurs de barres omnibus d'installation de commutation basse tension

(30) Priorität: 21.12.1989 DE 8914980 U
(43) Veröffentlichungstag der Anmeldung: 24.07.1991
(73) Patentinhaber: Klöckner-Moeller GmbH, 53115 Bonn (DE)
(72) Erfinder: Frenzel, Anton, W-5210 Troisdorf (DE); Müller, Reinhard, W-5040 Brühl (DE); von Hasselt, Georg, W-5441 Ettringen (DE)

(56) Entgegenhaltungen:
- DE-A- 3 337 977
- DE-B- 1 131 769
- DE-C- 3 709 280

## Beschreibung

Die Erfindung betrifft einen Schalt- oder Abgangskasten nach dem Oberbegriff des Anspruches 1, der insbesondere zur Verwendung auf Schienenverteilern von Niederspannungs-Schaltanlagen bestimmt ist.

Bei solchen Schalt- oder Abgangskästen muß aus sicherheitstechnischen Gründen gewährleistet sein, daß beim Herstellen der kundenseitigen Anschlüsse und auch bei sonstigen Handhabungen eine sichere Arbeit im Kundenanschlußraum möglich ist, ohne daß spannungsführende Teile im Geräteraum berührt werden können.

So kann es z. B. bei Schaltanlagen mit metallgekapselten Schaltzellen vorkommen, daß zu Trennkontakten, Abgängen, Sammelschienen oder damit verbundenen elektrischen Komponenten, z. B. für Revisionszwecke, Zugang verschafft werden muß, während andere Komponenten in der Schaltzelle unter Spannung bleiben müssen, um die Versorgung mit elektrischer Energie sicherzustellen. In diesen Fällen müssen die unter Spannung verbleibenden Komponenten gegen Berührung geschützt werden.

Es sind auch metallgekapselte Schaltzellen bekannt, bei denen die Trennkontakte paarweise pro Phase übereinander angeordnet sind, und die an den Seitenwänden befestigte seitliche Führungen aufweisen, in die bei ausgefahrenem Trennwagen eine Trennplatte aus Isolierstoff eingeschoben werden kann. Diese Trennplatte reicht vom Bereich der Schaltzellenöffnung bis an die Rückwand und unterteilt das Innere der Schaltzelle in zwei Teilräume, einen oberen mit den oberen Trennkontakten und einen unteren mit unteren Trennkontakten und den jeweils damit elektrisch verbundenen Komponenten. Diese bekannte Schutzvorrichtung hat sich zwar gut bewährt, um das Bedienungspersonal gegen die Berührung von Komponenten im oberen Teilraum zu schützen, während an Komponenten im unteren Teilraum unter günstigen Bedingungen gearbeitet werden kann. Weniger geeignet ist diese bekannte Vorrichtung hingegen für Revisionsarbeiten an Komponenten im oberen Teilraum, weil der untere Teilraum gegen Zutritt von außen nicht geschützt ist und der Zugang zu den zu revidierenden Komponenten infolge der Zellentiefe erschwert ist.

Zur Vermeidung dieser Schwierigkeiten ist es bei derartigen metallgekapselten Schaltzellen bereits bekannt (DE-OS 38 27 171), daß an der einschiebbaren Trennplatte zusätzlich ein plattenförmiges Schutzorgan angelenkt ist, das bei ganz eingeschobener Trennplatte den unteren Teilraum der Schaltzelle nach außen hin abschließt. Hiermit ist jedoch nicht das Problem gelöst, das sich bei der Arbeit am kundenseitigen Anschlußraum von Schalt- oder Abgangskästen nach dem Oberbegriff des Anspruches 1 ergibt.

Aus der europäischen Patentanmeldung mit der Veröffentlichungsnummer 0 168 310 A1 ist bereits ein Schalt- oder Abgangskasten nach dem Oberbegriff des Anspruches 1 bekannt, der insbesondere zur Verwendung auf Schienenverteilern von Niederspannungs-Schaltanlagen bestimmt ist und ein Metallgehäuse hat, das durch eine senkrechte Trennwand in einen Geräteraum und in einen Anschlußraum unterteilt ist, wobei der Anschlußraum erst nach Öffnen einer beide Räume überdekkenden Außentür und einer am Gehäuse randseitig aufliegenden Isolierplatte zugänglich ist.

Bei diesem bekannten Schalt- oder Abgangskasten ist bei Arbeiten an den kundenseitigen Anschlußschienen einerseits nicht ausreichend sichergestellt, daß der Geräteraum nach Herausnehmen der Sicherungselemente oder Sicherungsautomaten vor dem Beginn der Arbeit an den Anschlußschienen wieder sicher verschlossen wird, und zum anderen kann die den kundenseitigen Anschlußraum abdeckende Isolierplatte auch bereits entfernt werden, bevor eine Trennung der Anschlußschienen vom Netz erfolgt ist.

Es sind Hausanschlußkästen bekannt, die in der DE 33 37 977 A1 gezeigt sind, in der NH-Sicherungen eingesetzt werden und einen Anschluß und Konsumentenraum aufweisen.

In der DE 33 37 977 A1 ist eine verschiebare Abdeckung vorhanden, die aber erst durch eine Schwenkbewegung oder durch vollständiges Abnehmen verschoben werden kann, weil Rippen 11 in Schlitze greifen. Es ist außerdem nicht gesichert, daß die Abdeckung ganz entfernt wird, so daß auch ein Arbeiten ohne Abdeckung möglich wäre.

Bei Abgangskästen in Schienenverteilern werden besondere Anforderungen an die Berührungssicherheit gestellt, weil die Auswirkungen von Störlichtbögen, die insbesondere bei der Berührung spannungsführender Teile mit einem Werkzeug entstehen, aufgrund extrem hoher Kurzschlußleistungen besonders hoch sind. Bei Störlichtbögen kann neben der sehr hohen Druck- und Hitzeentwicklung aufgrund der hohen Plasmatemperatur der Plasmasäule ein Absprengen von Türen und Wänden mit hoher Geschwindigkeit eintreten.
Bei Anwesenheit von Personen kann es durch die heißen Gase und durch glühende Teilchen zu erheblichen Verbrennungen kommen. Außerdem kann die von der Plasmasäule ausgehende Strahlung zur Verblitzung der Augenführen.

Eine Verwendung derartiger Abdeckungen auf Schienernverteilern bei der zumindest derart hohe Ströme und Kurzschlußleistungen auftreten können, daß ein Metallgehäuse erforderlich ist, ist nicht erwünscht.

Der Erfindung liegt die Aufgabe zugrunde, einen Schalt- oder Abgangskasten nach dem Oberbegriff des Anspruches 1, der zur Verwendung auf Schienenverteilern von Niederspannungs-Schaltanlagen bestimmt ist, so auszubilden, daß eine sichere und berührungsfreie Arbeit im Kundenanschlußraum auch dann möglich ist, wenn der Abgangskasten als solcher noch mit stromführenden Teilen in Verbindung steht.

Diese Aufgabe wird gemäß der Erfindung durch das Kennzeichen des Anspruches 1 gelöst, während in den Ansprüchen 2 bis 8 besonders vorteilhafte Weiterbildungen der Erfindung gekennzeichnet sind.

Durch die Erfindung ist sichergestellt, daß Arbeiten am kundenseitigen Anschlußraum nur dann durchgeführt werden können, wenn zuvor der Sicherungsträger von dem Geräteraum entfernt und anschließend der den Anschlußraum verschließende Schiebedeckel über die Öffnung am Geräteraum für den Sicherungsträger verschoben worden ist, wobei durch die Merkmale des Anspruches 2 eine noch weitergehende Sicherung dadurch erreicht wird, daß der Schiebedeckel in dieser Stellung durch eine verriegelbare mechanische Sperre gegen ein Zurückschieben in seine Ausgangs- oder Schließstellung gesichert ist.

Durch die Merkmale der Ansprüche 3 und 4 wird einerseits eine besondere Steifigkeit des Schiebedeckels ohne zusätzlichen Materialeinsatz erreicht, wodurch andererseits auch eine besonders einwandfreie und leichte Verschiebbarkeit des Schiebedeckels ebenso wie eine ausreichende Steifigkeit und Abstützung in den Stellungen erreicht wird, in denen der Schiebedeckel einerseits den kundenseitigen Anschlußraum und andererseits die Öffnung am Geräteraum für den Sicherungsträger verschließt.

Eine sowohl funktions- als auch herstellungsmäßig besonders vorteilhafte Ausbildung der Sperreinrichtung ergibt sich weiterhin durch die Merkmale der Ansprüche 5 bis 8.

Ein bevorzugtes Ausführungsbeispiel der Erfindung ist in der Zeichnung schematisch dargestellt. Es zeigen
- Fig. 1: einen Schalt- oder Abgangskasten für Niederspannungs-Schaltanlagen auf einem Schienenverteiler in perspektivischer Ansicht,
- Fig. 2: eine Seitenansicht des Schalt- oder Abgangskastens mit darin gestrichelt angedeuteten Geräten und Anschlußschienen,
- Fig. 3: eine perspektivische Teilansicht des Schiebedeckels an einem solchen Kasten,
- Fig. 4: eine perspektivische Teilinnenansicht des Schalt- oder Abgangskastens mit teilweise geöffnetem Schiebedekkel und einem Sperriegel für diesen,
- Fig. 5: einen senkrechten Querschnitt durch den Schalt- oder Abgangskasten mit Sperriegel und
- Fig. 6: einen zugehörigen Längsschnitt durch den Sperriegel in der Sperrstellung bei vollständig geöffnetem Schiebedeckel.

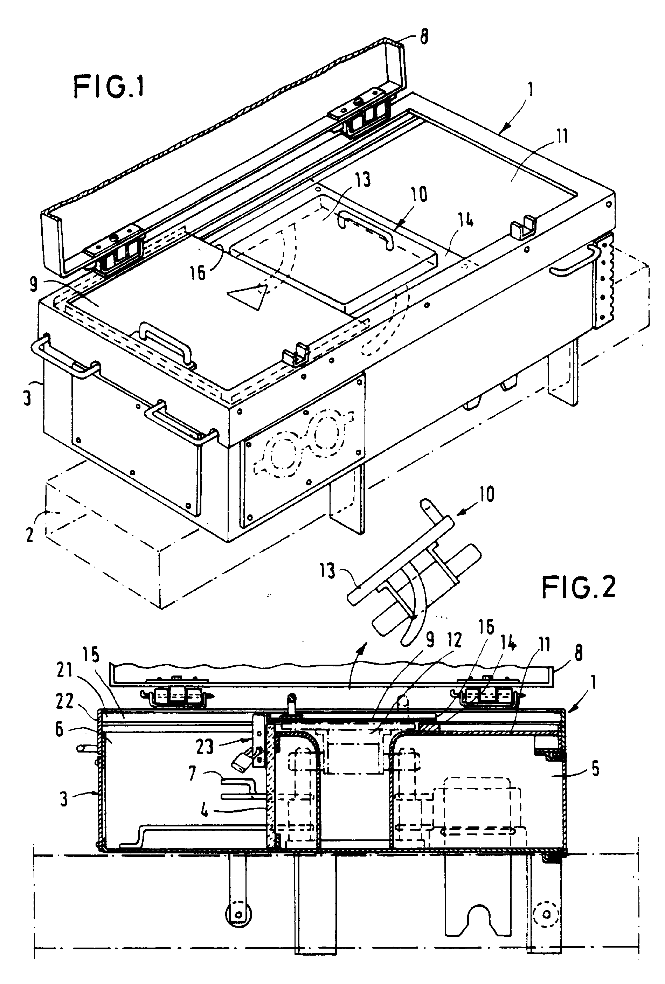

Der in Fig. 1 und 2 gezeigte Schalt- oder Abgangskasten 1 ist insbesondere für eine Verwendung auf Schienenverteilern 2 von Niederspannungs-Schaltanlagen bestimmt und hat ein Metallgehäuse 3, das durch eine Trennwand 4 in einen Geräteraum 5 und in einen Anschlußraum 6 mit den zugehörigen Anschlußschienen 7 unterteilt ist und eine beide Räume 5, 6 überdeckende Außentür 8 aufweist.

Wie in Fig. 1 und 2 im einzelnen zu erkennen ist, ist der Anschlußraum 6 erst nach Öffnen eines am Gehäuse 3 randseitig geführten Schiebedeckels 9 zugänglich, während der Geräteraum 5 einen zur Vorderseite des Schalt- oder Abgangskastens 1 herausnehmbaren Sicherungsträger 10 aufweist, der an einem den Geräteraum 5 abdeckenden Zwischenboden 11 mit einer fensterartigen Öffnung 12 für den Sicherungsträger 10 aufliegt.

Der Sicherungsträger 10 hat eine Tragplatte 13, die in gleicher Ebene mit dem Schiebedeckel 9 angeordnet ist, so daß der Schiebedeckel 9 erst nach Entfernen des Sicherungsträgers 10 von dem Zwischenboden 11 über die dann freiliegende Öffnung 12 zum Einsetzen des Sicherungsträgers 10 so weit verschoben werden kann, daß er diese Öffnung vollständig abdeckt und den Anschlußraum 6 für Arbeiten an den darin befindlichen Verbraucher-Anschlußschienen 7 freigibt.

Wie in Fig. 1 und 2 weiterhin zu erkennen ist, ist die Öffnung 12 am Zwischenboden 11 des Gehäuses 3 zum Einsetzen des Sicherungsträgers 10 von einem Blendrahmen 14 umgeben, der in einer Ebene dicht unterhalb von U-förmigen seitlichen Führungen 15 für den Schiebedeckel 9 am Gehäuse 3 derart angeordnet ist, daß der Schiebedeckel 9 in der geschlossenen Stellung von Fig. 1 nur einen Randteil des Blendrahmens 14 überdeckt und mit seiner vorderen Querkante 16 gegen die in gleicher Ebene befindliche Abdeckplatte 13 des Sicherungsträgers 10 stößt und somit durch diese gegen Verschieben gesichert ist.

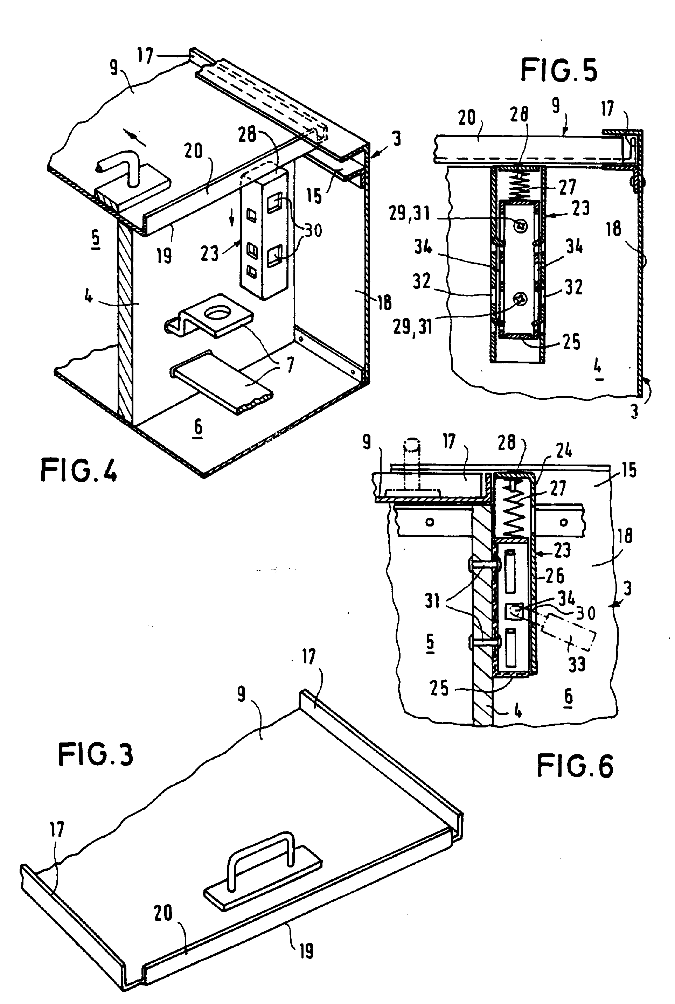

Der Schiebedeckel 9 weist ferner, wie insbesondere in Fig. 3 bis 6 im einzelnen gezeigt ist, an seinen beiden Längsseitenrändern nach unten oder nach oben abgewinkelte parallele Führungskanten 17 auf, mit denen er in den zum Schiebedeckel 9 hin offenen seitlichen Führungen 15 an den beiden Seitenwänden 18 des Gehäuses längsverschiebbar und gegen Abheben sicher geführt ist.

Außerdem besitzt der Schiebedeckel 9 an seiner rückwärtigen Querkante 19 einen ebenso wie die Führungskanten 17 an den beiden Längsseitenrändern nach oben oder nach unten abgewinkelten Versteifungsrand 20, mit dem er in der Schließstellung von Fig. 1 in ein U-Profil 21, das an der benachbarten Stirnwand 22 des Gehäuses 3 in einer Ebene mit den Führungen 15 an den beiden Seitenwänden 18 des Gehäuses 3 liegt, formschlüssig eingreift.

Für eine Arbeit an dem Schalt- oder Abgangskasten 1 muß zunächst die Außentür 8 geöffnet werden. Sodann muß der Sicherungsträger 10 aus der Öffnung 12 am Zwischenboden 11, der den Geräteraum 5 abdeckt, entfernt werden, wie dies in Fig. 2 gezeigt ist. Erst dann kann der Schiebedeckel 9 von dem kundenseitigen Anschlußraum 6 in die in Fig. 2 gezeigte Offenstellung verschoben werden, in der er die Öffnung 12 am Zwischenboden 11, vollständig überdeckt und außerdem den kundenseitigen Anschlußraum 6 bis zur Trennwand 4 gegenüber dem Geräteraum 5 ebenfalls vollständig freigibt.

Um in dieser Stellung, in der der Anschlußraum 6 mit den vom Stromnetz getrennten kundenseitigen Anschlußschienen 7 vollständig freiliegt, ein Verschieben des Schiebedeckels 9 in zuverlässiger Weise zu verhindern, ist dieser, wie in Fig. 2 bis 6 weiterhin gezeigt ist, durch eine verriegelbare mechanische Sperre 23 gegen ein Zurückschieben in seine Ausgangs- oder Schließstellung von Fig. 1 gesichert.

Als mechanische Sperre 23 für den Schiebedeckel 9 ist ein aus Blech gebogener Sperriegel 24 vorgesehen, der an der Trennwand 4 zwischen dem Geräteraum 5 und dem Anschlußraum 6 quer zum Schiebedeckel 9 angeordnet und so ausgebildet ist, daß er nach Erreichen der Offenstellung des Schiebedeckels 9 (Fig. 2 und 6) von diesem freikommt und unter Federwirkung selbsttätig in eine Sperrstellung vorspringt, in der er die rückwärtige Querkante 19 des Schiebedeckels 9 bei Freigabe der Öffnung des Anschlußraumes 6 sperrend hintergreift.

Der Sperriegel 24 besteht aus einem an der Trennwand 4 befestigten Träger 25 und einem daran längsverschiebbaren Riegelstück 26, das unter der Wirkung einer zwischen dem Träger 25 und dem Riegelstück 26 eingespannten Schraubendruckfeder 27 steht und mit seinem Riegelkopf 28 in der Schließstellung des Schiebedeckels 9 an dessen Unter- bzw. Innenseite anliegt, um nach Freigabe des Anschlußraumes 6 durch den Schiebedeckel 9 von diesem freizukommen und in die Sperrstellung von Fig. 2 und 6 hinter die rückwärtige Querkante 19 des Schiebedeckels 9 zu gelangen.

Am Träger 25 und am Riegelstück 26 des Sperriegels 24 sind in der gespannten Stellung von Fig. 5 miteinander fluchtende Paare von Öffnungen 29, 30 einerseits für Befestigungsschrauben 31 am Träger 25 und andererseits Öffnungen 30 für einen Schraubendreher oder dergleichen am Riegelstück 26 vorhanden, so daß der Sperriegel 24 in der gespannten Stellung von Fig. 4 und 5 an die Trennwand 4 auf der Seite des Anschlußraumes 6 angeschraubt werden kann.

Außerdem befinden sich am Träger 25 und am Riegelstück 26 des Sperriegels 24 Paare von seitlichen Einhängeöffnungen 32 für ein oder mehrere Vorhängeschlösser 33, die sich nur in der Sperrstellung des Sperriegels 24 von Fig. 6 mit zugehörigen Paaren von Öffnungen 34 am Träger 25 überdecken, so daß verantwortliche Aufsichtspersonen den Schiebedeckel 9 während der Arbeiten an den Schienenanschlüssen 7 in der Offenstellung von Fig. 2 und 6 sichern können, um ihn nach Entfernen der Einhängeschlösser 33 aus den Öffnungen 32, 34 am Sperriegel 24 erst dann wieder freizugeben, wenn die Anschlußarbeiten beendet sind und außerdem sichergestellt ist, daß der Sicherungsträger 10 nach Schließen des Schiebedeckels 9 wieder in die Öffnung 12 an der Zwischenwand 11 eingesetzt und außerdem auch die Außentür 8 wieder absolut sicher verschlossen wird.

## Patentansprüche

1. Schalt- oder Abgangskasten (1) zur Verwendung auf Schienenverteilern von Niederspannungs-Schaltanlagen mit einem Metallgehäuse (3), das durch eine senkrechte Trennwand (4) in einen Geräteraum (5) und einen Anschlußraum (6) unterteilt ist, wobei der Anschlußraum (6) erst nach Öffnen einer am Gehäuse randseitig aufliegenden Platte zugänglich ist und mit einer beide Räume überdeckenden Außentür (8), **dadurch gekenn****zeichnet,** daß der Geräteraum (5) einen zur Vorderseite des Metallgehäuses (3) herausnehmbaren Sicherungsträger (10) mit einer Tragplatte (13) aufweist, mit der der Sicherungsträger (10) an einem den Geräteraum (5) abdeckenden Zwischenboden (11) mit einer Öffnung (12) zum Einsetzen des Sicherungsträgers (10) randseitig aufliegt, und daß der Anschlußraum (6) durch einen Schiebedeckel (9) verschlossen ist, der am Gehäuse (3) in gleicher Ebene wie die Tragplatte (13) des Sicherungsträgers (10) derart verschiebbar geführt ist, daß er erst nach Entfernen des Sicherungsträgers (10) von dem Zwischenboden (11) über die dann freiliegende Öffnung (12) zum Einsetzen des Sicherungsträgers (10) so weit verschoben werden kann, daß er diese Öffnung (12) vollständig verschließt und den Anschlußraum (6) für Arbeiten an den darin befindlichen Verbraucher-Anschlußschienen (7) und dergleichen freigibt, wobei der Schiebedeckel (9) nur auf der Ebene der Tragplatte (13) verschiebbar ist und nicht aus dieser Ebene herausnehmbar ist.

2. Schalt- oder Abgangskasten nach Anspruch 1, **dadurch** **gekennzeichnet,** daß die Öffnung (12) am Zwischenboden (11) des Gehäuses (3) zum Einsetzen des Sicherungsträgers (10) von einem Blendrahmen (14) umgeben ist, der in einer Ebene dicht unterhalb von seitlichen Führungen (15) für den Schiebedeckel (9) am Gehäuse (3) derart angeordnet ist, daß der Schiebedeckel (9) in der geschlossenen Stellung nur einen Randteil des Blendrahmens (14) überdeckt und mit seiner vorderen Querkante (16) an die in gleicher Ebene befindliche Tragplatte (13) des Sicherungsträgers (10) anstößt und somit durch diese gegen Verschieben gesichert ist, und daß der Schiebedeckel (9) nach Entfernen des Sicherungsträgers (10) von dem Geräteraum (5) und einem anschließenden Verschieben über die Öffnung (12) für den Sicherungsträger (10) in der Offenstellung, in der der Anschlußraum (6) vollständig freiliegt, durch eine verriegelbare mechanische Sperre (23) gegen ein Zurückschieben in seine Ausgangs- oder Schließstellung gesichert ist.

3. Schalt- oder Abgangskasten nach Anspruch 1 und 2, **dadurch** **gekennzeichnet,** daß der Schiebedeckel (9) an seinen beiden Längsseitenrändern nach unten oder oben abgewinkelte parallele Führungskanten (17) aufweist, mit denen er in den zum Schiebedeckel (9) hin offenen seitlichen Führungen (15) am Gehäuse (3) längsverschiebbar geführt ist.

4. Schalt- oder Abgangskasten nach Anspruch 1 bis 3, **dadurch** **gekennzeichnet,** daß der Schiebedeckel (9) an seiner rückwärtigen Querkante (19) einen ebenso wie die Führungskanten (17) an den beiden Längsseitenrändern nach oben oder unten abgewinkelten Versteifungsrand (20) aufweist, mit dem er in der Schließstellung in ein U-Profil (21), das an der benachbarten Stirnwand (22) des Gehäuses (3) in einer Ebene mit den Führungen (15) an den beiden Seitenwänden (18) des Gehäuses (3) liegt, formschlüssig eingreift.

5. Schalt- oder Abgangskasten nach einem der Ansprüche 1 bis 4, **dadurch gekennzeichnet,** daß als mechanische Sperre (23) für den Schiebedeckel (9) ein Sperriegel (24) vorgesehen ist, der an der Trennwand (4) zwischen dem Geräteraum (5) und dem Anschlußraum (6) quer zur Ebene des Schiebedeckels (9) angeordnet und derart ausgebildet ist, daß er nach Erreichen der Offenstellung des Schiebedeckels (9) von diesem freikommt und unter Federwirkung selbsttätig in eine Sperrstellung vorspringt, in der er die rückwärtige Querkante (19) des Schiebedeckels (9) bei Freigabe der Öffnung des Anschlußraumes (6) sperrend hintergreift.

6. Schalt- oder Abgangskasten nach Anspruch 1 bis 5, **dadurch** **gekennzeichnet,** daß der Sperriegel (24) aus einem an der Trennwand (4) befestigten Träger (25) und einem daran längsverschiebbaren Riegelstück (26) besteht, das unter der Wirkung einer zwischen dem Träger (25) und dem Riegelstück (26) eingespannten Schraubendruckfeder (27) steht und mit seinem Riegelkopf (28) in der Schließstellung des Schiebedekkels (9) an dessen Unter- bzw. Innenseite anliegt, um nach Freigabe des Anschlußraumes (6) durch den Schiebedeckel (9) von diesem freizukommen und mit seinem Riegelkopf (28) in die Sperrstellung hinter die rückwärtige Querkante (19) des Schiebedeckels (9) zu gelangen.

7. Schalt- oder Abgangskasten nach Anspruch 1 bis 6, **dadurch** **gekennzeichnet,** daß am Träger (25) und am Riegelstück (26) des Sperriegels (23) nur in der gespannten Stellung miteinander fluchtende Paare von Öffnungen (29) für Befestigungsschrauben (31) am Träger (25) und von Öffnungen (30) für einen Schraubendreher oder dergleichen am Riegelstück (26) vorhanden sind.

8. Schalt- oder Abgangskasten nach Anspruch 1 bis 7, **dadurch** **gekennzeichnet,** daß am Träger (25) und am Riegelstück (26) des Sperriegels (23) sich in der Sperrstellung deckende Paare von seitlichen Öffnungen (32, 34) zum Einhängen eines oder mehrerer Vorhängeschlösser (33) oder dergleichen vorhanden sind.

## Claims

1. Switch or exit box (1) for use on busbar trunking systems of low-voltage switchboard plants with a metal casing (3) which is divided into an instrument compartment (5) and a compartment for connections (6) by means of a vertical partition (4), the compartment for connections (6) being accessible only after the opening of a plate resting on an edge of the casing and with an external door (8) covering both compartments, in which the instrument compartment (5) has a fuse carrier (10) which can be removed towards the front side of the metal casing (3) provided with a supporting plate (13) which allows the fuse carrier (10) to rest on an edge of an intermediate bottom (11) covering the instrument compartment (5) and having an opening (12) to introduce the fuse carrier (10), and in which the compartment for connections (6) is closed by means of a slide cover (9) which is held in a slidable guidance on the casing (3) at the same level as the supporting plate (13) of the fuse carrier (10) in such a way that it can only be shifted so far across the opening (12), provided for the insertion of the fuse carrier (10) and being open at this moment, as to close this opening (12) completely and give access to the compartment for connections (6) in order to work on the consumer service bars (7) and on similar devices located in this compartment after having removed the fuse carrier (10) from the intermediate bottom (11), while the slide cover (9) is only movable on the level of the supporting plate (13) and cannot be removed from this level.

2. Switch or exit box as claimed in claim 1, **wherein** the opening (12) in the intermediate bottom (11) of the casing (13) provided in order to allow the insertion of the fuse carrier (10) is surrounded with a frame (14) which is arranged at a level slightly below the lateral guidances (15) for the slide cover (9) on the casing (3) in such a way that the slide cover (9) covers only a part on the edge of the frame (14) and touches on the supporting plate (13) of the fuse carrier (10) with its transverse front edge (16) located at the same level in closed position, thus being secured against shifting by this plate, and wherein a lockable mechanical stop (23) protects the slide cover (9) against its shifting back into its initial or closed position after the removal of the fuse carrier (10) from the instrument compartment (5) and subsequent shifting across the opening (12) provided for the fuse carrier (10) in the open position in which the compartment for connections (6) is completely open.

3. Switch or exit box as claimed in claims 1 and 2, **wherein** the slide cover (9) presents parallel guide edges (17) with an upward or downward offset on its two longitudinal sides which guide the slide cover (9) allowing its longitudinal displacement in lateral guidances (15) on the casing (3) open towards the slide cover (9).

4. Switch or exit box as claimed in claims 1 through 3, **wherein** the slide cover (9) presents a reinforcement edge (20) on its rear transverse edge (19) which is bent upwards or downwards on the two longitudinal sides in the same way as the guide edges (17) and interlocks with a U-shaped beam (21) which is situated on the neighbouring end wall (22) of the casing (3) at the same level as the guidances (15) on the two lateral walls (18) of the casing (3).

5. Switch or exit box as claimed in any claim 1 through 4, **wherein** a safety catch (24) is provided as a mechanical stop (23) for the slide cover (9), located on the partition (4) between the instrument compartment (5) and the compartment for connections (6), crosses the plane of the slide cover (9) and is formed in such a way that it disengages from the slide cover (9) when this has reached the open position and projects automatically under the action of a spring into a locking position in which it grips behind the rear transverse edge (19) of the slide cover (9) when the opening of the compartment for connections (6) is cleared.

6. Switch or exit box as claimed in claims 1 through 5, **wherein** the safety catch (24) consists of a support (25) attached to the partition (4) and of a locking device (26) which can be displaced in a longitudinal direction on this support, is under the action of a helical pressure spring (27) fixed between the support (25) and the locking device (26) and has a locking head (28) that touches on the lower or respectively inner side of the slide cover (9) in the closed position of the slide cover (9) in order to disengage from the slide cover (9) after this has cleared the compartment for connections (6) and to arrive in the locking position behind the rear transverse edge (19) of the slide cover (9).

7. Switch or exit box as claimed in claims 1 through 6, **wherein** the support (25) and the locking piece (25) of safety catch (23) only present pairs of openings (29) for fastening screws (31) on the support (25) which are in alignment with openings (30) for a screw driver or a similar device on the locking piece (26) in the position under tension.

8. Switch or exit box as claimed in claims 1 through 7, **wherein** the support (25) and the locking piece (26) of the locking catch (23) present pairs of lateral openings (32, 34) which coincide in locking position and allow the insertion of one or several padlocks (33) or similar devices.

## Revendications

1. Boîtier de manoeuvre ou de départ (1) destiné à l'emploi dans des distributeurs à barres d'installations de couplage à basse tension comprenant un boîtier métallique (3) qui est séparé en un compartiment d'instruments (5) et un compartiment de jonction (6) par une cloison verticale (4), le compartiment de jonction (6) étant accessible uniquement après l'ouverture d'un panneau positionné sur le côté du boîtier et pourvu d'une porte extérieure (8) recouvrant les deux compartiments, caractérisé en ce que le compartiment d'instruments (5) présente un porte-fusibles (10) pouvant être enlevé en direction de la face antérieure du boîtier métallique (3) et comportant une plaque de support (13) grâce à laquelle le porte-fusibles (10) s'appuie sur le côté d'un fond intermédiaire (11) recouvrant le compartiment d'instruments (5) et disposant d'une ouverture (12) permettant l'insertion du porte-fusibles (10) et que le compartiment de jonction (6) est fermé par un couvercle à coulisses (9) qui est guidé coulissant sur le boîtier (3) sur le même plan que la plaque de support (13) du porte-fusibles (10) de telle façon que c'est uniquement après enlèvement du porte-fusibles (10) du fond intermédiaire (11) que ce couvercle peut être déplacé à travers de l'ouverture (12), alors libérée, permettant l'insertion du porte-fusibles (10), jusqu'à ce qu'il ferme complètement cette ouverture (12) et ouvre le compartiment de jonction (6) afin de permettre des travaux sur les barres de connection (7) destinées aux utilisateurs ou sur des dispositifs similaires, le couvercle à coulisses (9) ne pouvant être déplacé que sur le plan de la plaque de support (13) et ne pouvant être enlevé de ce plan.

2. Boîtier de manoeuvre ou de départ selon la revendication 1, **caractérisé en** **ce que** l'ouverture (12) au fond intermédiaire (11) du boîtier (3) permettant l'insertion du porte-fusibles (10) est entourée d'un cadre dormant (14) qui est disposé à un niveau un peu en bas des glissières latérales (15) destinées au couvercle à coulisses (9) sur le boîtier (3) de telle manière à ce que le couvercle à coulisses (9), en position fermée, ne couvre qu'une partie sur le bord du cadre dormant (14) et touche, avec son côté transversal avant (16), la plaque de support (13) du porte-fusibles (10) se trouvant au même niveau, le couvercle étant ainsi protégé contre le déplacement grâce à cette plaque, et que, après enlèvement du porte-fusibles (10) du compartiment d'instruments (5) et déplacement suivant à travers de l'ouverture (12) destinée au porte-fusibles (10) en position ouverte, dans laquelle le compartiment d'instruments (6) est complètement ouvert, le couvercle à coulisses (9) est protégé contre un déplacement de retour dans sa position initiale ou position fermée grâce à un dispostif d'arrêt mécanique verrouillable (23).

3. Boîtier de manoeuvre ou de départ selon les revendications 1 et 2, **caractérisé en ce que** le couvercle à coulisses (9) présente des côtés de guidage (17) pourvus d'un angle vers le bas ou vers le haut sur ses deux bords longitudinaux grâce auxquels il est guidé dans des glissières latérales (15) permettant son déplacement longitudinal, aménagées sur le boîtier (3) et ouvertes sur le couvercle à coulisses (9).

4. Boîtier de manoeuvre ou de départ selon les revendications 1 à 3, **caractérisé en ce que** le couvercle à coulisses (9) présente un bord de renforcement (20) aménagé sur son côté tranversal arrière (19) et pourvu d'un angle vers le bas ou vers le haut sur ses deux bords longitudinaux de la même manière que les côtés de guidage (17), bord de renforcement grâce auquel le couvercle à coulisses (9) est raccordé par la forme à un profil en U (21) qui se trouve sur la paroi frontale (22) avoisinante du boîtier (3) sur le même plan que les guidages (15) aménagés sur les deux parois latérales (18) du boîtier (3).

5. Boîtier de manoeuvre ou de départ selon l'une quelconque des revendications 1 à 4, **caractérisé en ce qu**'une barre d'arrêt (24) est prévue comme dispositif mécanique d'arrêt (23) pour le couvercle à coulisses (9), barre qui est logée sur la cloison (4) entre le compartiment d'instruments (5) et le compartiment de jonction (6) de façon transversale par rapport au plan du couvercle à coulisses (9) et qui est aménagée de telle manière qu'elle se libère du couvercle à coulisses (9) après que celui-ci soit arrivé dans sa position ouverte et qu'elle s'avance automatiquement sous l'action d'un ressort dans une position d'arrêt, dans laquelle elle s'étend de façon arrêtante derrière le côté transversal arrière (19) du couvercle à coulisses (9) au moment de la libération de l'ouverture du compartiment de jonction (6).

6. Boîtier de manoeuvre ou de départ selon les revendications 1 à 5, **caractérisé en ce que** la barre d'arrêt (24) consiste en un support (25) monté sur la cloison (4) et en un élément de verrouillage (26) pouvant être déplacé de façon longitudinale sur ce support, élément de verrouillage qui est soumis à l'action d'un ressort hélicoïdal de pression (27) encastré entre le support (25) et l'élément de verrouillage (26) et dont la tête de verrouillage (28) touche le côté inférieur ou respectivement le côté intérieur du couvercle à coulisses (9) dans la position fermée de ce dernier, afin de se libérer de ce dernier après libération du compartiment de jonction (6) par le couvercle à coulisses (9) et d'arriver dans la position de verrouillage derrière le côté transversal arrière (19) du couvercle à coulisses (9) par sa tête de verrouillage (28).

7. Boîtier de manoeuvre ou de départ selon les revendications 1 à 6, **caractérisé en ce que** le support (25) et l'élément de verrouillage (26) du dispositif d'arrêt (23) ne présentent des pairs d'ouvertures (29) destinées à des vis de fixation (31) sur le support (25) et d'ouvertures (30) permettant le passage d'un tournevis ou d'un outil similaire à l'élément de verrouillage (26) qui sont alignées les unes sur les autres qu'en position tendue.

8. Boîtier de manoeuvre ou de départ selon les revendications 1 à 7, **caractérisé en ce que** le support (25) et l'élément de verrouillage (26) du dispositif d'arrêt (23) présentent des pairs d'ouvertures latérales (32, 34) qui se recouvrent en position de verrouillage et permettent l'accrochage d'un ou de plusieurs cadenas (33) ou de dispositifs similaires.
